(19) **Europäisches Patentamt**
**European Patent Office**
**Office européen des brevets**

(11) **EP 4 485 274 A1**

(12) **EUROPÄISCHE PATENTANMELDUNG**

(43) Veröffentlichungstag:
**01.01.2025 Patentblatt 2025/01**

(21) Anmeldenummer: **23182517.5**

(22) Anmeldetag: **29.06.2023**

(51) Internationale Patentklassifikation (IPC):
*G06N 3/045* (2023.01)    *G06N 3/082* (2023.01)
*G06N 3/096* (2023.01)    *G06N 3/098* (2023.01)

(52) Gemeinsame Patentklassifikation (CPC):
**G06N 3/098; G06N 3/045; G06N 3/082;**
**G06N 3/096;** G06N 3/084

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens AG Österreich**
**1210 Wien (AT)**

(72) Erfinder: **Schall, Daniel**
**2020 Hollabrunn (AT)**

(74) Vertreter: **Siemens Patent Attorneys**
**Postfach 22 16 34**
**80506 München (DE)**

(54) **COMPUTER-IMPLEMENTIERTES VERFAHREN UND SYSTEM ZUM BETRIEB EINES TECHNISCHEN GERÄTS DURCH EINEN KLIENTEN**

(57)    Computer-implementiertes Verfahren zum Betrieb eines technischen Geräts durch einen Klienten eines Systems mit einem Server (S) und zumindest zwei Klienten (C1-C3) mit einer jeweiligen Klienten-Kennung (CID1-CID3), wobei folgende Schritte ausgeführt werden:

a) Bereitstellen eines globalen Modells (GM),

b) Bereitstellen des globalen Modells (GM) an den jeweiligen Klienten (C1-C3),

c) Bestimmen einer Klasse (C) des jeweiligen Klienten-Modells (CM1-CM3) mit einer jeweils bestimmten Genauigkeit (AC),

d) Festlegen einer jeweiligen Modell-Typ-Kennung (MT-ID) für das jeweilige Klienten-Modell (CM1-CM3),

e) Festlegen einer Menge an Gewichten (W) als leere Menge,

f) Bestimmen von jeweiligen Modell-Gewichten (wi) für die Klasse (C) anhand eines Relevanz-Parameters (Ri, Rj, Rk),

g) Verbinden der jeweiligen Modell-Gewichte für die Klasse (C) des jeweiligen Klienten-Modells (CM1-CM3) mit der Menge an Gewichten (W),

h) Bereitstellen der jeweiligen Klienten-Kennung (CID1-CID3), der jeweiligen Modell-Typ-Kennung (MT-ID), der jeweiligen Genauigkeit (AC) und der jeweiligen Menge an Gewichten (W) an den Server (S),

i) Trainieren des globalen Modells (GM) mit der Menge an Gewichten (W) von jenen Klienten (C1-C3), welche zumindest eine vorgegebene Genauigkeit aufweisen, sowie mit einem vorgegebenen Modell-Typ übereinstimmen,

j) Bereitstellen des trainierten globalen Modells an den zumindest einen Klienten (C1-C3), und Betreiben des jeweiligen technischen Geräts (TD1-TD3).

## FIG 4

**Beschreibung**

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zum Betrieb eines technischen Geräts durch einen Klienten eines Systems mit einem Server und zumindest zwei Klienten mit einer jeweiligen Klienten-Kennung.

Ferner betrifft die Erfindung ein Computer-Programm-Produkt.

Heutzutage wenden industrielle Systeme häufig maschinelles Lernen (kurz ML) und künstliche Intelligenz (kurz KI) an, um beispielsweise Produktionsmaschinen zu steuern oder aus Produktionsanlagen erfassten Betriebsdaten zu analysieren und daraus auf zukünftige Ereignisse zu schließen.

Ein ML-Modell zu trainieren kann sehr aufwändig sein und es kann beispielsweise erforderlich sein, nach einen Anlagenwartung das Training erneut durchzuführen.

Ebenso kann es sehr aufwändig sein angepassten Betriebserfordernissen Rechnung zu tragen, beispielsweise eine bestehende Produktionsanlage um neue Anlagenteile zu erweitern.

Es kann föderiertes Lernen (kurz FL) eingesetzt werden, um ML-/KI-Modelle über mehrere Teilnehmer eines Klienten-Server-Systems zu trainieren und ein gemeinsames globales Modell neuen Klienten zur Verfügung zu stellen.

Bei föderiertem Lernen wird jedoch in jeder föderierten Runde nur das gesamte Klienten-Modell aktualisiert und ein teilweises Lernen des globalen Modells ist derzeit nicht vorgesehen.

Dementsprechend ist es Aufgabe der Erfindung eine Lösung bereitzustellen, welche ein spezifisches Training eines globalen Modells innerhalb eines FL-Systems erlaubt.

Die Aufgabe wird durch ein Verfahren eingangs genannter Art gelöst, wobei folgende Schritte ausgeführt werden:

a) Bereitstellen eines globalen Modells an den Server,

b) Bereitstellen des globalen Modells an den jeweiligen Klienten als jeweiliges Klienten-Modell, durch den Server,

c) Bestimmen einer Klasse des jeweiligen Klienten-Modells mit einer jeweils bestimmten Genauigkeit innerhalb eines jeweiligen vorbestimmten Wertebereichs, durch den jeweiligen Klienten,

d) Festlegen einer jeweiligen Modell-Typ-Kennung für das jeweilige Klienten-Modell mit der jeweiligen Klasse, durch den jeweiligen Klienten,

e) Festlegen einer Menge an Gewichten als leere Menge, durch den jeweiligen Klienten,

f) Bestimmen von jeweiligen Modell-Gewichten für die Klasse im jeweiligen Klienten-Modell als neuronales Netzwerk anhand zumindest eines jeweiligen Relevanz-Parameters, welcher durch den Lagenweisen Relevanz-Ausbreitungs-Algorithmus bestimmt wird, durch den jeweiligen Klienten,

g) Verbinden der jeweiligen Modell-Gewichte für die Klasse des jeweiligen Klienten-Modells mit der Menge an Gewichten, durch den jeweiligen Klienten,

h) Bereitstellen der jeweiligen Klienten-Kennung, der jeweiligen Modell-Typ-Kennung, der jeweiligen Genauigkeit und der jeweiligen Menge an Gewichten an den Server, durch den jeweiligen Klienten,

i) Trainieren des globalen Modells mit der Menge an Gewichten von jenen Klienten, welche zumindest eine vorgegebene Genauigkeit aufweisen, sowie mit einem vorgegebenen Modell-Typ übereinstimmen, als trainiertes globales Modell durch den Server,

j) Bereitstellen des trainierten globalen Modells an den zumindest einen Klienten als jeweiliges Klienten-Modell, und Betreiben des jeweiligen technischen Geräts mit dem jeweiligen Klienten-Modell.

Dadurch wird erreicht, dass ein spezifisches Training eines Modells innerhalb eines FL-Systems durchgeführt wird, nämlich unter Anwendung nur jener Klienten-Modelle, welche eine vorgegebene Mindest-Genauigkeit sowie eine Übereinstimmung im Modell-Typ aufweisen, wodurch eine Verbesserung des globalen Modells erzielt werden kann.

Es gibt im Stand der Technik keine Möglichkeit, die FL-Aufgabe auf ein bestimmtes Teilsegment des KI-Modells zu fokussieren, was jedoch durch die Erfindung erreicht werden kann.

In einer Weiterbildung der Erfindung ist es vorgesehen, dass das Bestimmen der Klasse des jeweiligen Klienten-Modells mit einer Genauigkeit innerhalb eines vorbestimmten Wertebereichs mithilfe einer Konfusions-Matrix erfolgt.

Dadurch kann auf einfache Weise eine Klassen-Zuordnung erreicht und implementiert werden.

In einer Weiterbildung der Erfindung ist es vorgesehen, dass der Lagen-weise Relevanz-Ausbreitungs-Algorithmus die Gewichte im jeweiligen Klienten-Modell und Aktivierungen von Neuronen am Eingang im neuronalen Netzwerkdurch einem vorwärts-Durchlauf bis zum Ausgang anwendet, und in einem rückwärts-Durchlauf zum Eingang im neuronalen Netzwerk zurück ausbreitet.

Dadurch kann auf einfache Weise der Relevanz-Parameter bestimmt werden, welcher angibt, welche Eingangsgrößen am Eingang einen hohen Einfluss auf Ausgangsgrößen au Ausgang haben.

In einer Weiterbildung der Erfindung ist es vorgesehen, dass der zumindest eine Relevanz-Parameter durch folgenden Zusammenhang definiert ist:

$$R_j = \sum_k \frac{a_j w_{jk}}{\sum_{0,j} a_j w_{jk}} R_k$$

mit

| | |
|---|---|
| $R_j, R_k$ ... | Relevanz, (aufeinanderfolgende) Lagen |
| $a_j$ ... | Aktivierung eines Neurons, |
| $w_{ik}$ ... | Gewicht zwischen zwei Neuronen, |
| $k$ ... | Zähler. |

Dadurch kann auf einfache Weise der Relevanz-Parameter implementiert werden.

In einer Weiterbildung der Erfindung ist es vorgesehen, dass das jeweilige technische Gerät mit dem jeweiligen Klienten-Modell mit Steuerbefehlen betrieben wird, welche das Klienten-Modell verwenden.

Dadurch kann auf einfache Weise eine technische Wirkung des verbesserten globalen Modells beziehungsweise des Klienten-Modells erreicht werden, da die Steuerbefehle als eine Repräsentation des Modells angesehen werden können.

In einer Weiterbildung der Erfindung ist es vorgesehen, dass vom jeweiligen technischen Gerät Betriebsdaten von einem Erfassungsmittel, welches vom jeweiligen Klienten umfasst ist, erfasst werden, und vom jeweiligen Klienten unter Anwendung des jeweiligen Klienten-Modells ein Betriebszustand des jeweiligen Klienten ermittelt wird.

Dadurch kann auf einfache Weise eine technische Wirkung des verbesserten globalen Modells beziehungsweise des Klienten-Modells erreicht werden, da die Betriebsdaten als Eingangsdaten bei der Anwendung des Modells angesehen werden können.

Die erfindungsgemäße Aufgabe wird auch durch ein System zum Betrieb eines technischen Geräts, umfassend ein System mit einem Server und zumindest zwei Klienten, welche jeweils mit einem jeweiligen technischen Gerät verbunden sind, und das System dazu eingerichtet ist, und das System dazu eingerichtet ist, das erfindungsgemäße Verfahren auszuführen.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen

Die Erfindung wird nachfolgend anhand eines in den beigeschlossenen Zeichnungen dargestellten Ausführungsbeispiels näher erläutert. In den Zeichnungen zeigt:

Fig. 1    ein Ausführungsbeispiel für ein "Federated Learning"-System,

Fig. 2    ein Ausführungsbeispiel für Klassen von Modelldaten mit einer Konfusions-Matrix,

Fig. 3    zeigt ein Beispiel zu Bestimmung von Relevanz-Parametern,

Fig. 4    zeigt ein Ausführungsbeispiel des erfindungsgemä-ßen Verfahrens.

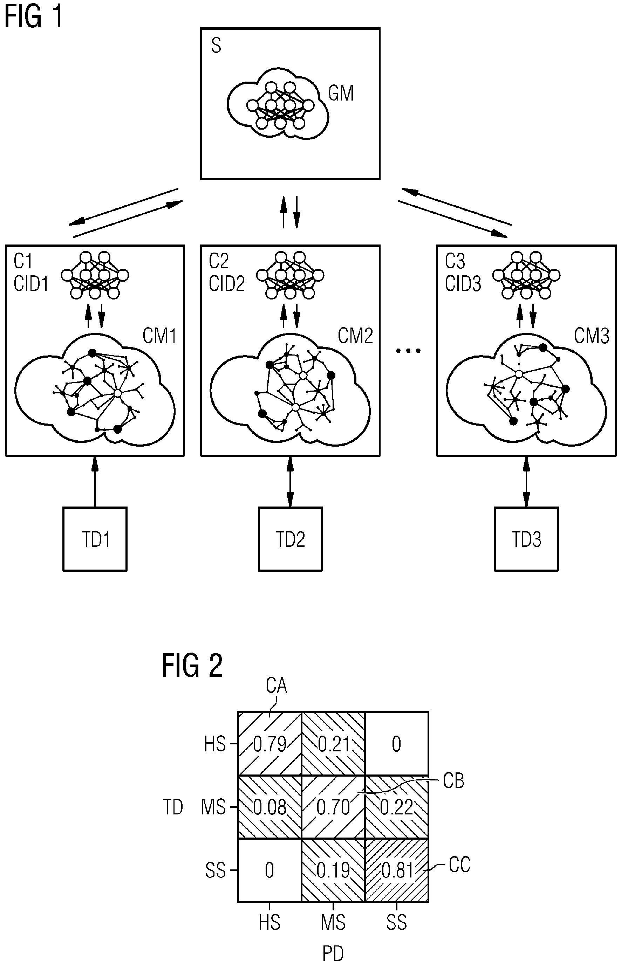

**Fig. 1** zeigt ein Ausführungsbeispiel für ein "Federated Learning"-System nach dem Stand der Technik.

Solche FL-Systeme rufen die KI-Modellaktualisierungen der verbundenen Klienten ab, berechnen den Gesamtdurchschnitt der erhaltenen Modellgewichtungen und verteilen die gemittelten Gewichtungen neu auf die Klienten.

Ein System zum Betrieb eines technischen Geräts umfasst einen Server S und drei Klienten C1-C3, welche jeweils mit einem jeweiligen technischen Gerät TD1-TD3 verbunden sind.

Die Klienten C1-C3 weisen jeweils Klienten-Kennungen CID1-CID3 auf und speichern Klienten-Modelle CM1-CM3, mit welchen die technischen Geräte TD1-TD3 mithilfe von Steuerbefehlen angesteuert werden können, welche auf Basis der Klienten-Modelle CM1-CM3 ermittelt werden können.

**Fig. 2** zeigt ein Ausführungsbeispiel für Klassen von Modelldaten mit einer Konfusions-Matrix.

Dabei werden Daten über Diagnosen dargestellt, welche mithilfe eines Modells ermittelt werden können.

In der Figur wird eine prognostizierte Diagnose PD einer tatsächliche Diagnose TD gegenübergestellt.

Auf beiden Achsen der Konfusions-Matrix werden vorbestimmte Wertebereiche aufgetragen, wie eine Unterteilung des gesamten Wertebereichs in einen ernsten Zustand SS, einen moderaten Zustand MS und einen gesunden Zustand HS.

Die Kombinationen der genannten Zustände SS, MS und HS können verschiedenen Klassen zugeordnet werden, wie eine Klasse CC.

Konfusions-Matrizen erleichtern die Feststellung, wie genau die Ergebnisse eines Modells wahrscheinlich sind, indem sie offenlegen, wenn das Modell wiederholt zwei Klassen verwechselt.

Konfusions-Matrizen bewerten die Leistung eines Klassifizierungs-Modells und ermöglichen es Geschäftsanwendern zu bestimmen, welche Daten ihr Modell möglicherweise nicht korrekt klassifizieren kann.

Mit anderen Worten bringt eine Konfusions-Matrix eine Klassifizierung von Daten mit vorgegebenen Klassen in einer Klassifizierungs-Prognose und einer erreichen Klassifizierung in einen Zusammenhang.

Ein Klient kann beispielsweise ein Klassifizierungsmodell mit drei Klassen {CA, CB, CC} haben.

In diesem Beispiel funktioniert die Vorhersage der Klassen CA und CB für den Kunden mit hoher Genauigkeit einwandfrei - der Kunde muss keine Modellparameter in Bezug auf CA oder CB verbessern oder verfeinern.

5      EP 4 485 274 A1      6

Es kann jedoch sein, dass das Modell in Bezug auf die Klassifizierungsgenauigkeit für Klasse C nicht gut abschneidet.

Prognostizierte Beschriftungen (engl. "label"), die zur Klasse CC gehören, werden oft mit Klasse CA oder CB verwechselt. Daher würde der Kunde davon profitieren, wenn die Genauigkeit der Klasse CC verbessert würde. Dieses Szenario wird jedoch derzeit von FL-Systemen nicht unterstützt.

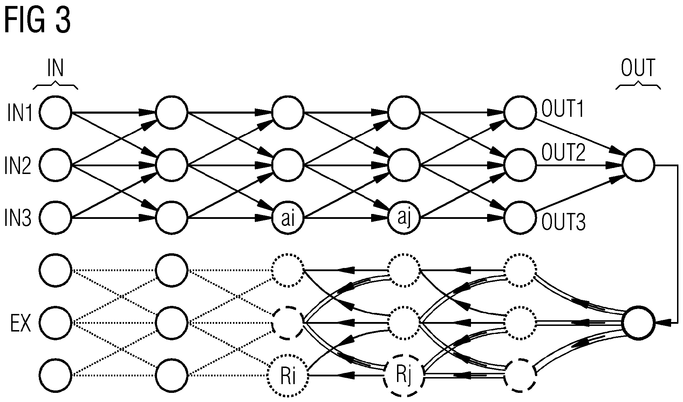

**Fig. 3** zeigt ein Beispiel zu Bestimmung von Relevanz-Parametern, welche angeben, welche Eingangsgrößen am Eingang einen hohen Einfluss auf Ausgangsgrößen au Ausgang haben.

Die Relevanz-Parameter können im bekannten Lagen-weise Relevanz-Ausbreitungs-Algorithmus eingesetzt werden.

Dabei werden die die Gewichte im jeweiligen Klienten-Modell und Aktivierungen von Neuronen am Eingang im neuronalen Netzwerkdurch einem vorwärts-Durchlauf bis zum Ausgang, und in einem rückwärts-Durchlauf zum Eingang im neuronalen Netzwerk zurück anwendet und ein Erklärung EX (engl. "explanation") liefert, welche Eingangs-Neuronen den größten Einfluss auf Ausgangs-Neuronen haben.

Der Relevanz-Parameter kann durch folgenden Zusammenhang definiert werden:

$$R_j = \sum_k \frac{a_j w_{jk}}{\sum_{0,j} a_j w_{jk}} R_k$$

mit

$R_j, R_k$ ...     Relevanz, (aufeinanderfolgende) Lagen

$a_j$ ...     Aktivierung eines Neurons,

$w_{ik}$ ...     Gewicht zwischen zwei Neuronen,

$k$ ...     Zähler.

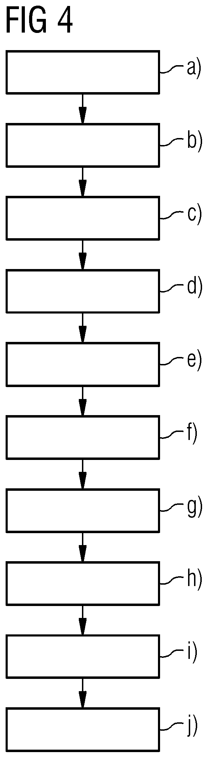

**Fig. 4** zeigt ein Ausführungsbeispiel des erfindungsgemäßen Verfahrens.

Ein System zum Betrieb eines technischen Geräts umfasst einen Server S und drei Klienten C1-C2, welche jeweils mit einem jeweiligen technischen Gerät TD1-TD3 verbunden sind.

Folgende Verfahrens-Schritte werden ausgeführt:

     a) Bereitstellen eines globalen Modells GM an den Server S,
     b) Bereitstellen des globalen Modells GM an den jeweiligen Klienten C1-C3 als jeweiliges Klienten-Modell CM1-CM3, durch den Server S,
     c) Bestimmen einer Klasse C des jeweiligen Klienten-Modells CM1-CM3 mit einer jeweils bestimmten Genauigkeit AC innerhalb eines jeweiligen vorbestimmten Wertebereichs, durch den jeweiligen Klienten C1-C3,
     d) Festlegen einer jeweiligen Modell-Typ-Kennung MT-ID für das jeweilige Klienten-Modell CM1-CM3 mit der jeweiligen Klasse C, durch den jeweiligen Klienten C1-C3,
     e) Festlegen einer Menge an Gewichten W als leere Menge, durch den jeweiligen Klienten C1-C3,
     f) Bestimmen von jeweiligen Modell-Gewichten wi für die Klasse C im jeweiligen Klienten-Modell CM1-CM3 als neuronales Netzwerk anhand zumindest eines jeweiligen Relevanz-Parameters Ri, Rj, Rk, welcher durch den Lagen-weisen Relevanz-Ausbreitungs-Algorithmus LRP bestimmt wird, durch den jeweiligen Klienten C1-C3,
     g) Verbinden der jeweiligen Modell-Gewichte für die Klasse C des jeweiligen Klienten-Modells CM1-CM3 mit der Menge an Gewichten W, durch den jeweiligen Klienten C1-C3,
     h) Bereitstellen der jeweiligen Klienten-Kennung CID1-CID3, der jeweiligen Modell-Typ-Kennung MT-ID, der jeweiligen Genauigkeit AC und der jeweiligen Menge an Gewichten W an den Server S, durch den jeweiligen Klienten C1-C3,
     i) Trainieren des globalen Modells GM mit der Menge an Gewichten W von jenen Klienten C1-C3, welche zumindest eine vorgegebene Genauigkeit aufweisen, sowie mit einem vorgegebenen Modell-Typ übereinstimmen, als trainiertes globales Modell durch den Server S,
     j) Bereitstellen des trainierten globalen Modells an den zumindest einen Klienten C1-C3 als jeweiliges Klienten-Modell CM1-CM3, und Betreiben des jeweiligen technischen Geräts TD1-TD3 mit dem jeweiligen Klienten-Modell CM1-CM3.

Das Bestimmen der Klasse C des jeweiligen Klienten-Modells CM1-CM3 kann mit einer Genauigkeit innerhalb eines vorbestimmten Wertebereichs mithilfe einer Konfusions-Matrix erfolgen.

Der Lagen-weise Relevanz-Ausbreitungs-Algorithmus LRP kann die Gewichte im jeweiligen Klienten-Modell CM1-CM3 und Aktivierungen von Neuronen am Eingang IN im neuronalen Netzwerkdurch einem vorwärts-Durchlauf bis zum Ausgang OUT anwenden, und sich in einem rückwärts-Durchlauf zum Eingang IN im neuronalen Netzwerk zurück ausbreiten.

Der zumindest eine Relevanz-Parameter Ri, Rj, Rk kann durch folgenden Zusammenhang definiert werden:

$$R_j = \sum_k \frac{a_j w_{jk}}{\sum_{0,j} a_j w_{jk}} R_k$$

mit

$R_j, R_k$ ...     Relevanz, (aufeinanderfolgende) Lagen

4

$a_j$ ... Aktivierung eines Neurons,

$w_{ik}$ ... Gewicht zwischen zwei Neuronen,

k ... Zähler.

Das jeweilige technische Gerät TD1-TD3 kann mit dem jeweiligen Klienten-Modell CM1-CM3 mit Steuerbefehlen betrieben werden, welche das Klienten-Modell CM1-CM3 verwenden beziehungsweise durch Anwendung des jeweiligen Klienten-Modells CM1-CM3 erzeugt werden.

Vom jeweiligen technischen Gerät TD1-TD3 können Betriebsdaten von einem Erfassungsmittel, welches vom jeweiligen Klienten C1-C3 umfasst ist, erfasst werden, und vom jeweiligen Klienten C1-C3 unter Anwendung des jeweiligen Klienten-Modells CM1-CM3 ein Betriebszustand des jeweiligen Klienten C1-C3 ermittelt werden.

**Bezugszeichenliste:**

| | |
|---|---|
| AC | Genauigkeit |
| C, CA, CB, CC | Klasse |
| C1-C3 | Klient |
| CID1-CID3 | Klienten-Kennung |
| EX | Erklärung (engl. "explanation") |
| HS | Gesunder Zustand (engl. "healthy state") |
| IN, IN1-IN3 | Eingang |
| K-ID | Klienten-Kennung |
| LRP | Lagen-weiser Relevanz-Ausbreitungs-Algorithmus (engl. "layerwise relevance propagation") |
| M | Eingangs-Modell |
| MS | Moderater Zustand (engl. "moderate state") |
| MT | Modell-Typ |
| MT-ID | Kennung von Modell-Typ |
| OUT, OUT1-OUT3 | Ausgang |
| PD | prognostizierte Diagnose |
| Ri, Rj | Relevanz-Parameter |
| SS | ernster Zustand (engl. "severe state") |
| S | Server |
| TD | tatsächliche Diagnose |
| W | Menge an Gewichten |

**Patentansprüche**

1. Computer-implementiertes Verfahren zum Betrieb eines technischen Geräts durch einen Klienten eines Systems mit einem Server (S) und zumindest zwei Klienten (C1-C3) mit einer jeweiligen Klienten-Kennung (CID1-CID3), wobei folgende Schritte ausgeführt werden:

a) Bereitstellen eines globalen Modells (GM) an den Server (S),
b) Bereitstellen des globalen Modells (GM) an den jeweiligen Klienten (C1-C3) als jeweiliges Klienten-Modell (CM1-CM3), durch den Server (S),
c) Bestimmen einer Klasse (C) des jeweiligen Klienten-Modells (CM1-CM3) mit einer jeweils bestimmten Genauigkeit (AC) innerhalb eines jeweiligen vorbestimmten Wertebereichs, durch den jeweiligen Klienten (C1-C3),
d) Festlegen einer jeweiligen Modell-Typ-Kennung (MT-ID) für das jeweilige Klienten-Modell (CM1-CM3) mit der jeweiligen Klasse (C), durch den jeweiligen Klienten (C1-C3),
e) Festlegen einer Menge an Gewichten (W) als leere Menge, durch den jeweiligen Klienten (C1-C3),
f) Bestimmen von jeweiligen Modell-Gewichten (wi) für die Klasse (C) im jeweiligen Klienten-Modell (CM1-CM3) als neuronales Netzwerk anhand zumindest eines jeweiligen Relevanz-Parameters (Ri, Rj, Rk), welcher durch den Lagen-weisen Relevanz-Ausbreitungs-Algorithmus (LRP) bestimmt wird, durch den jeweiligen Klienten (C1-C3),
g) Verbinden der jeweiligen Modell-Gewichte für die Klasse (C) des jeweiligen Klienten-Modells (CM1-CM3) mit der Menge an Gewichten (W), durch den jeweiligen Klienten (C1-C3),
h) Bereitstellen der jeweiligen Klienten-Kennung (CID1-CID3), der jeweiligen Modell-Typ-Kennung (MT-ID), der jeweiligen Genauigkeit (AC) und der jeweiligen Menge an Gewichten (W) an den Server (S), durch den jeweiligen Klienten (C1-C3),
i) Trainieren des globalen Modells (GM) mit der Menge an Gewichten (W) von jenen Klienten (C1-C3), welche zumindest eine vorgegebene Genauigkeit aufweisen, sowie mit einem vorgegebenen Modell-Typ übereinstimmen, als trainiertes globales Modell durch den Server (S),
j) Bereitstellen des trainierten globalen Modells an den zumindest einen Klienten (C1-C3) als jeweiliges Klienten-Modell (CM1-CM3), und Betreiben des jeweiligen technischen Geräts (TD1-TD3) mit dem jeweiligen Klienten-Modell (CM1-CM3).

2. Verfahren nach dem vorhergehenden Anspruch, wobei das Bestimmen der Klasse (C) des jeweiligen Klienten-Modells (CM1-CM3) mit einer Genauigkeit innerhalb eines vorbestimmten Wertebereichs mithilfe einer Konfusions-Matrix erfolgt.

3. Verfahren nach einem der vorhergehenden Ansprüche, wobei der Lagen-weise Relevanz-Ausbreitungs-Algorithmus (LRP) die Gewichte im jeweiligen Klienten-Modell (CM1-CM3) und Aktivierungen von Neuronen am Eingang (IN) im neuronalen Netzwerk durch einem vorwärts-Durchlauf bis zum Ausgang (OUT) anwendet, und in einem rückwärts-Durchlauf zum Eingang (IN) im neuronalen Netzwerk zurück ausbreitet.

4. Verfahren nach dem vorhergehenden Anspruch, wobei der zumindest eine Relevanz-Parameter (Ri, Rj, Rk) durch folgenden Zusammenhang definiert ist:

$$R_j = \sum_k \frac{a_j w_{jk}}{\sum_{0,j} a_j w_{jk}} R_k$$

mit

$R_j$, $R_k$ ... Relevanz, (aufeinanderfolgende) Lagen
$a_j$ ... Aktivierung eines Neurons,
$w_{ik}$ ... Gewicht zwischen zwei Neuronen,
k ... Zähler.

5. Verfahren nach einem der Ansprüche 1 bis 4, wobei das jeweilige technische Gerät (TD1-TD3) mit dem jeweiligen Klienten-Modell (CM1-CM3) mit Steuerbefehlen betrieben wird, welche das Klienten-Modell (CM1-CM3) verwenden.

6. Verfahren nach einem der Ansprüche 1 bis 4, wobei vom jeweiligen technischen Gerät (TD1-TD3) Betriebsdaten von einem Erfassungsmittel, welches vom jeweiligen Klienten (C1-C3) umfasst ist, erfasst werden, und vom jeweiligen Klienten (C1-C3) unter Anwendung des jeweiligen Klienten-Modells (CM1-CM3) ein Betriebszustand des jeweiligen Klienten (C1-C3) ermittelt wird.

7. System zum Betrieb eines technischen Geräts, umfassend ein System mit einem Server und zumindest zwei Klienten, welche jeweils mit einem jeweiligen technischen Gerät (TD1-TD3) verbunden sind, und das System dazu eingerichtet ist, das Verfahren nach einem der vorhergehenden Ansprüche auszuführen.

8. Computer-Programm-Produkt mit darin gespeicherten maschinenlesbaren Anweisungen, die, wenn sie von einer Verarbeitungseinheit ausgeführt werden, diese veranlassen, das Verfahren nach einem der vorhergehenden Ansprüche auszuführen

FIG 1

FIG 2

FIG 3

## FIG 4

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Yu Fuxun ET AL: "Heterogeneous Federated Learning" In: "Heterogeneous Federated Learning", 20. März 2022 (2022-03-20), XP093109736, Gefunden im Internet: URL:https://arxiv.org/pdf/2008.06767.pdf> * Zusammenfassung * * Seite 2 – Seite 8 * ----- | 1-8 | INV. G06N3/045 G06N3/082 G06N3/096 G06N3/098 |
| A | LI WENZHE LI:  "Federated Knowledge Transfer for Heterogeneous Visual Models", EQUITY AND ACCESS IN ALGORITHMS, MECHANISMS, AND OPTIMIZATION, ACMPUB27, NEW YORK, NY, USA, 13. Dezember 2022 (2022-12-13), Seiten 1-7, XP058957345, DOI: 10.1145/3551626.3564955 ISBN: 978-1-4503-9478-9 * das ganze Dokument * ----- | 1-8 | |

RECHERCHIERTE
SACHGEBIETE (IPC)

G06N

Der vorliegende Recherchenbericht wurde für alle Patentansprüche erstellt

| Recherchenort | Abschlußdatum der Recherche | Prüfer |
|---|---|---|
| **Den Haag** | **7. Dezember 2023** | **Tsakonas, Athanasios** |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes
      Dokument

EPO FORM 1503 03.82 (P04C03)